# EUROPEAN PATENT APPLICATION

(11) **EP 2 662 998 A1**
(43) Date of publication of application: **13.11.2013**
(21) Application number: 12732162.8
(22) Date of filing: 04.01.2012
(51) Int. Cl.: H04J 11/00, H04J 1/00, H04W 88/02

(54) **MOBILE COMMUNICATION DEVICE AND CHANNEL QUALITY INDEX INFERRING METHOD**

(30) Priority: 05.01.2011 JP 2011000646
(71) Applicant: NEC CASIO Mobile Communications, Ltd., Kawasaki-shi Kanagawa 211-8666 (JP); NTT DoCoMo, Inc., Tokyo 100-6150 (JP)
(72) Inventor: SHIMANUKI, Noriyuki, Kawasaki-shi Kanagawa 211-8666 (JP)
(74) Representative: Vossius & Partner
(86) International application number: PCT/JP2012/050032
(87) International publication number: WO 2012/093675

(57) **Abstract**

Provided are a mobile communication device and a method for inferring a channel quality index, with which optimal channel quality index inference processing can be performed in mobile communication using TDD. The noise power of a reception signal and signal power inference values are obtained using a known signal which is included in a slot unit on the time axis and a sub-band unit that is a continuous fixed frequency bandwidth on the frequency axis. From among the inference values, a plurality of n inference values inferred at slot units are subjected to time-averaging processing at each sub-band. Time directional errors of the known signal are calculated in slot units. Based on a predetermined threshold value and differences in errors of adjacent slots from among the time directional errors, weighting coefficients are set for each of the n inference values in the time-average processing performed by a time-average power calculation means.

## Description

### {Technical Field}

The present application claims priority from Japanese Patent Application No. 2011-000646 filed on January 5, 2011, the contents of which are incorporated herein by reference.
The present invention relates to a mobile communication device, and a channel quality index estimation method.

### {Background Art}

In a mobile communication system in recent years, adaptive link control, in which a base station adaptively changes a transmission format such as a code ratio, a modulation method, and the like according to a channel quality index estimated by a mobile station, is employed for efficiently using a limited amount of wireless resource (for example, refer to PTLs 1 to 3).

In order to implement adaptive link control in a mobile communication system, an operation described below is generally conducted. More specifically, a mobile station estimates a Signal to Noise Ratio (SNR) by making use of a reference signal that comprises known signals contained in a resource on a certain frequency axis and a certain time axis. Then, the SNR is converted into a Channel State Information (CSI) for indicating a channel quality index, by using a table prepared in advance, and a downlink channel quality index is reported to a base station by making use of an uplink communication channel. CSI is a collective term for Channel Quality Indicator (CQI), Rank Index (RI), and Pre-coding Matrix Index (PMI). The base station receives a report from a plurality of mobile stations within a cell, and conducts link control in such a way as to assign a wireless resource to a mobile station that is judged to be with a relatively good channel quality.

In such adaptive link control, the base station conducts the adaptive link control on the basis of a channel quality index reported from a mobile station. Therefore, if an estimation accuracy of quality information reported is poor, an advantageous effect of the adaptive link control is lessened so that it becomes impossible to expect any improvement in a system throughput.

### {Citation List}

### {Patent Literature}

PTL 1: JP2006-197416A
PTL 2: JP2008-141313A
PTL 3: JP2010-161650A

### {Summary of Invention}

### {Technical Problem}

In the case of Time Division Duplex (TDD) of Long Term Evolution (LTE) standardized in 3rd Generation Partnership Project (3GPP), a wireless frame includes sub-frames (downlink sub-frames) that can be used for estimation of a channel quality index as well as uplink sub-frames and special sub-frames.

Uplink sub-frames are exclusively used for uplink communications, and cannot be used for estimation of a channel quality index. Meanwhile, some of special sub-frames contain a less ratio of known signals. Since a wireless frame includes these kinds of sub-frames, power estimation is performed according to time averaging on a number n of slots, which are recent slots with reference to CQI report timing, wherein it is attempted to make a value of n somewhat large in order for time averaging. Unfortunately under such a circumstance, it becomes necessary to make use of a result that is distant on a time axis. Therefore, an adverse impact may be caused for generating a channel quality index that reflects conditions of a propagation path at the time of estimation of a channel quality index. In the meantime, if the value of n is made less, or time averaging is not carried out, a wireless resource to be used for the power estimation becomes limited so that it is hardly possible to accurately express conditions of the propagation path.

Thus, it is an objective of the present invention to provide a mobile communication device and a channel quality index estimation method that give a solution to the issues described above, and are able to perform an optimum channel quality estimation in LTE using TDD.

### {Solution to Problem}

According to a first aspect of the present invention, provided is a mobile communication device comprising: a power estimation means calculating estimated values of a noise power and a signal power of a received signal by making use of known signals contained in a slot as a unit on a time axis, and contained in a sub-band of a certain continuous frequency bandwidth as a unit on a frequency axis; a time-averaged power calculation means time-averaging each sub-band with respect to a number n of estimated values which are estimated for each slot as a unit, among the estimated values calculated by the power estimation means; and a weighting coefficient setting means calculating a time-wise error of the known signals, in a slot as a unit, and setting a weighting coefficient for each of the n estimated values for a time averaging in the time-averaged power calculation means, according to a predetermined threshold and an error difference of adjacent slots among the time-wise errors.

According to a second aspect of the present invention, provided is a channel quality index estimation method comprising steps of: calculating estimated values of a noise power and a signal power of a received signal by making use of known signals contained in a slot as a unit on a time axis, and contained in a sub-band of a certain continuous frequency bandwidth as a unit on a frequency axis; time-averaging for each sub-band with respect to a number n of estimated values which are estimated for each slot as a unit, among the estimated values; and estimating a channel quality index for the received signal, according to the time-averaged estimated values: wherein, a time-wise error of the known signals, in a slot as a unit, is calculated; and a weighting coefficient is set for each of the n estimated values in the time-averaging, according to a predetermined threshold and an error difference of adjacent slots among the time-wise errors.

### {Advantageous Effects of Invention}

According to the present invention, the amount of fluctuation on a time axis (the amount of time fluctuation) is estimated by making use of known signals, and then a time averaging operation, in which the amount of time fluctuation is taken into consideration, is applied to power estimation for generating a channel quality index. Accordingly, even in TDD where it is necessary to carry out an averaging operation by using a received signal that is distant time-wise, an accuracy of power estimation can be secured in such a way as to be comparable to an accuracy in FDD (Frequency Division Duplex), and therefore, an optimum operation of estimation of a channel quality index can be performed, the operation being appropriate to a propagation path.

### {Brief Description of Drawings}

FIG. 1 is a block diagram of a mobile communication device according to an embodiment of the present invention.
FIG. 2 is a flowchart of an operation of generating a channel quality index.
FIG. 3 shows an example of a downlink signal format.
FIG. 4 is a drawing for explaining a calculation example with respect to a weighting coefficient to be used in a power time averaging operation.

### {Description of Embodiments}

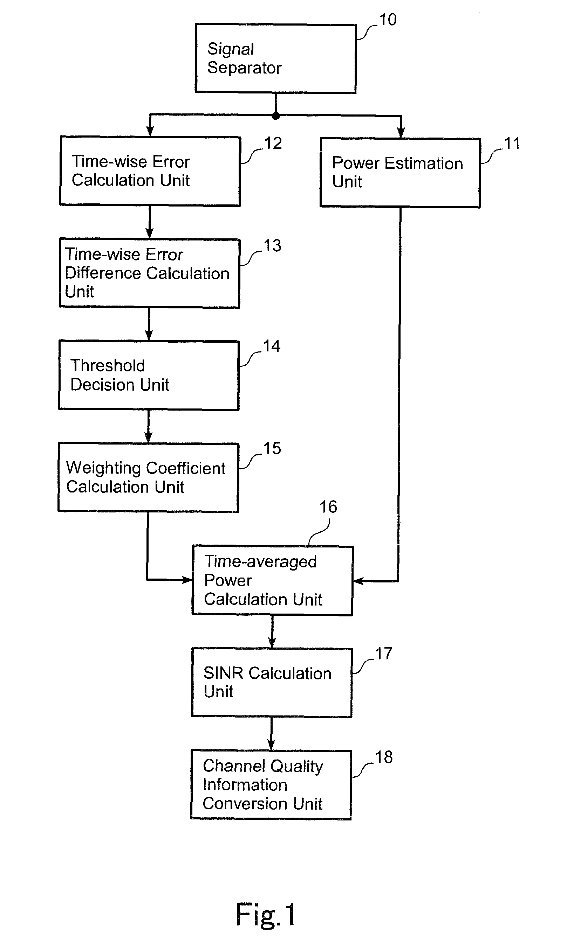

FIG. 1 is a block diagram of a mobile communication device according to an embodiment of the present invention. The mobile communication device is used as a mobile station compatible with LTE-TDD. FIG. 1 shows only a part of configuration in relation to estimation of a channel quality index in a down link. More specifically, the mobile communication device is equipped with a signal separator 10, a power estimation unit 11, a time-wise error calculation unit 12, a time-wise error difference calculation unit 13, a threshold decision unit 14, a weighting coefficient calculation unit 15, a time-averaged power calculation unit 16, an SINR calculation unit 17, and a channel quality information conversion unit 18.

The signal separator 10 separates a reference signal as a known signal and a datum signal from a received signal, with respect to each slot as a unit on a time axis.

The power estimation unit 11 constitutes a power estimation means that calculates estimated values of a noise power and a signal power of a received signal by making use of a known signals contained in a slot as a unit on a time axis, and contained in a sub-band of a certain continuous frequency bandwidth as a unit on a frequency axis; and the power estimation unit 11 estimates the noise power and the signal power in a sub-band as a unit, while making use of a reference signal separated by the signal separator 10.

The time-wise error calculation unit 12, the time-wise error difference calculation unit 13, the threshold decision unit 14, and the weighting coefficient calculation unit 15 constitute a weighting coefficient setting means that calculates a time-wise error of the known signals, in a slot as a unit, and sets a weighting coefficient for each of the n estimated values for a time averaging in the time-averaged power calculation unit 16, according to a predetermined threshold and an error difference of adjacent slots among time-wise errors. The time-wise error calculation unit 12 calculates a time-wise error by way of calculating a difference between a reference signal of recent n slots in the past, as a result of excluding an uplink sub-frame and an invalid special sub-frame, and a reference signal of slots of CQI report timing, on the basis of slots of CQI report timing, in order for putting the difference into a power domain. The time-wise error difference calculation unit 13 calculates a difference in a time-wise error between valid adjacent slots. The threshold decision unit 14 makes a comparison of a threshold X, prepared in advance, and a time-wise error difference, and stores a decision result in a RAM (not shown). The weighting coefficient calculation unit 15 determines a weighting coefficient, according to the decision result that the threshold decision unit 14 has stored in the RAM.

The time-averaged power calculation unit 16 constitutes a time-averaged power calculation means; which time-averages for each sub-band with respect to a number n of estimated values, which are estimated for each slot as a unit, among the estimated values obtained by the power estimation unit 11. The time averaged power calculation unit 16 calculates a noise power and a signal power for a channel quality index by making use of the coefficient determined by the weighting coefficient calculation unit 15, and the noise power and the signal power for n slots estimated by the power estimation unit 11; wherein the noise power and the signal power being averaged in time.

The SINR calculation unit 17 calculates a Signal to Noise Interference Ratio (SINR) for a channel quality index, by making use of the time-averaged powers. Then, the channel quality information conversion unit 18 converts the SINR calculated to a channel quality index, by way of table look-up.

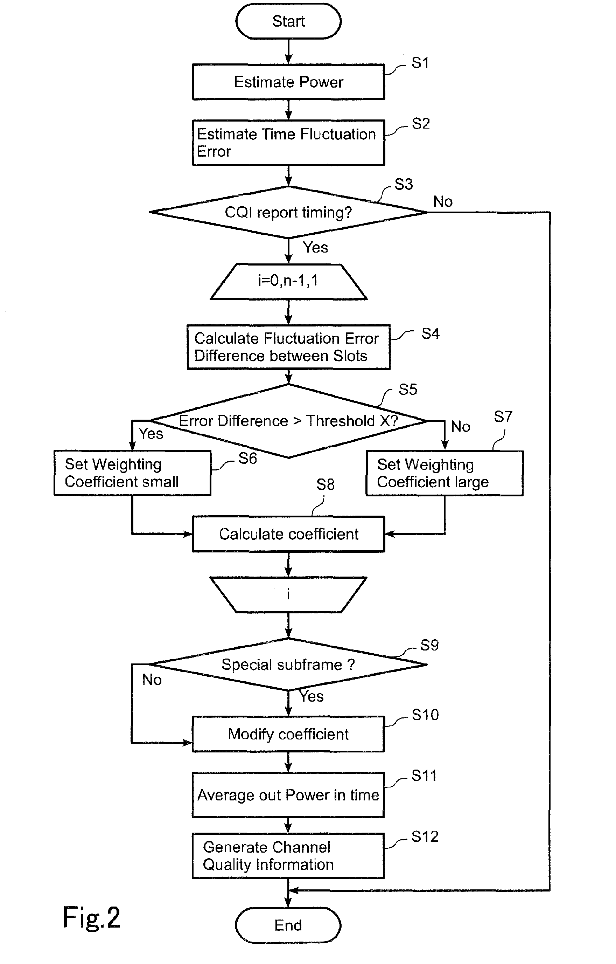

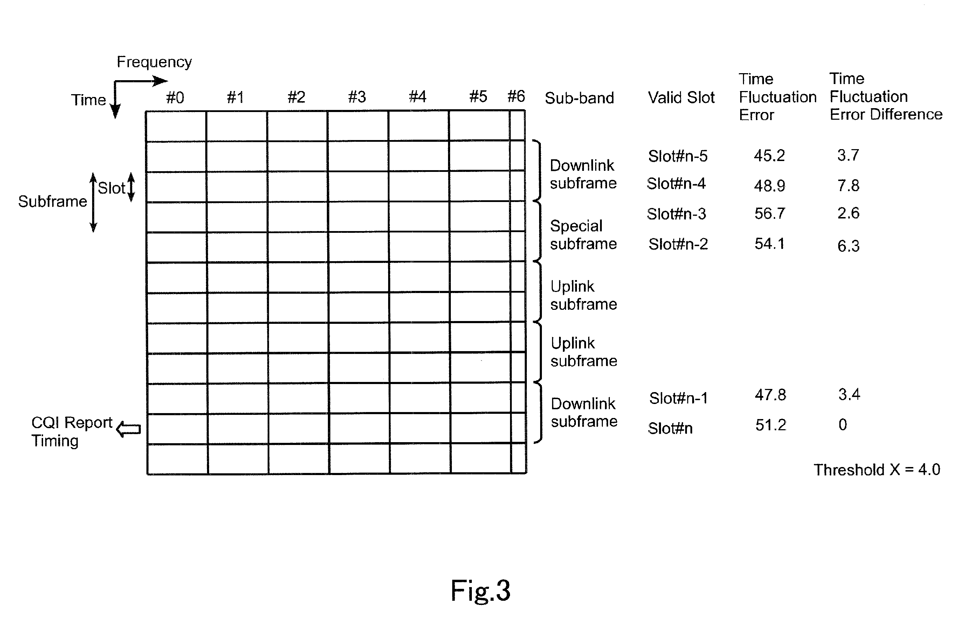

A concrete example of an operation of the mobile communication device shown in FIG. 1 is explained with reference to FIG. 2 and FIG. 3. FIG. 2 shows a flowchart of an operation of generating a channel quality index by the mobile communication device that receives a downlink signal. FIG. 3 shows an example of a downlink signal format. In this explanation, described is a case in which a downlink signal format is specified with an uplink-downlink configuration being 1, a special sub-frame configuration being 3, and with normal CP, and a system bandwidth being 5 MHz, according to LTE-TDD.

The signal separator 10 of the mobile communication device separates and picks up a reference signal as a known signal, out of a signal received by using a receiving antenna. The power estimation unit 11 calculates estimated values of a noise power and a signal power of each Resource Block Group (RBG) as a unit, for each slot, by making use of the reference signal separated (Step S1). At this time, since an uplink sub-frame is not a valid wireless resource for generating a channel quality index, the operation is not performed.

The time-wise error calculation unit 12 calculates a difference between each reference signal of an entire system bandwidth, which is separated for each slot, and a reference signal of slots of CQI report timing. Then, the time-wise error calculation unit 12 calculates an estimated value of a time-wise fluctuation error by way of converting the difference into an electric power and the like (Step S2). In FIG. 3, estimated values of time-wise fluctuation error with respect to the slots of CQI report timing; i.e., from Slot #n to Slot #n-5 in a reverse direction, are each 51.2, 47.8, 54.1, 56.7, 48.9, and 45.2. Incidentally, the method for calculating the time-wise fluctuation error is not limited to a method by calculating a difference simply, as described above, and any other method may be applied.

The time-wise error difference calculation unit 13, the threshold decision unit 14, and the weighting coefficient calculation unit 15 repeat the following operation (from Step S4 to Step S8) with respect to valid 'n' slots in the past (from Slot #n to Slot #n-5, as valid slots, in the example shown in FIG. 3) out of the slots of CQI report timing, when a sub-frame objective for the operation is of CQI report timing (Yes at Step S3). In other words, the time-wise error difference calculation unit 13 calculates a difference between adjacent slots (Step S4). In the example that FIG. 3 shows, values of the difference are 0, 3.4, 6.3, 2.6, 7.8, 3.7 in a reverse direction starting from Slot #n. The threshold decision unit 14 makes a comparison (Step S5) between an absolute value of each difference value obtained by the time-wise error difference calculation unit 13 and a threshold X prepared in advance (X = 4.0 prepared in FIG. 3). When a time-wise error difference is equal to or greater than the threshold X (Yes at Step S5), a change on a time axis is understood to be great under the situation. Then, the weighting coefficient calculation unit 15 calculates a weighting coefficient α to be used in a power time averaging operation, with a small value (to be equal to or greater than 0 and equal to or less than 1) (Step S6 and Step S8). On the other hand, when a time-wise error difference is equal to or less than the threshold X (No at Step S5), a change on a time axis is understood to be small under the situation. Then, it can be estimated with a high possibility that conditions of a propagation path at the time are reflected, and therefore the weighting coefficient calculation unit 15 calculates a weighting coefficient α with a great value (Step S7 and Step S8).

If the sub-frame is a special sub-frame (Yes at Step S9), estimation accuracy is expected to be lower than power estimation in a downlink sub-frame because that sub-frame contains less known signals. Therefore, the weighting coefficient calculation unit 15 modifies the coefficient α (Step S10) in such a way as to calculate another coefficient that is different from a weighting coefficient for a downlink sub-frame. For example, the weighting coefficient calculation unit 15 makes the amount of modification of a time-averaged power calculation less than that of a downlink sub-frame, by using a value obtained as a result of multiplying a weighting coefficient for a downlink sub-frame by 0.8, and adds the reduced amount to a weighting coefficient for a downlink sub-frame with close CQI report timing, in such a way that a coefficient sum becomes 1.

The time-averaged power calculation unit 16 calculates a noise power and a signal power, both after being time-averaged, (Step S11) by making use of the weighting coefficient α calculated through the operation from Step S4 to Step S10 and the noise power and the signal power of each slot which are obtained at Step S1. The SINR calculation unit 17 calculates a ratio between the noise power and the signal power (Signal to Noise Interference Ratio), and meanwhile the channel quality information conversion unit 18 converts the SINR calculated by the Signal to Noise Interference Ratio calculation unit 17 to a channel quality index, by way of table look-up (Step S12). Then, the channel quality index is reported to a base station by using an uplink sub-frame that is an uplink communication channel.

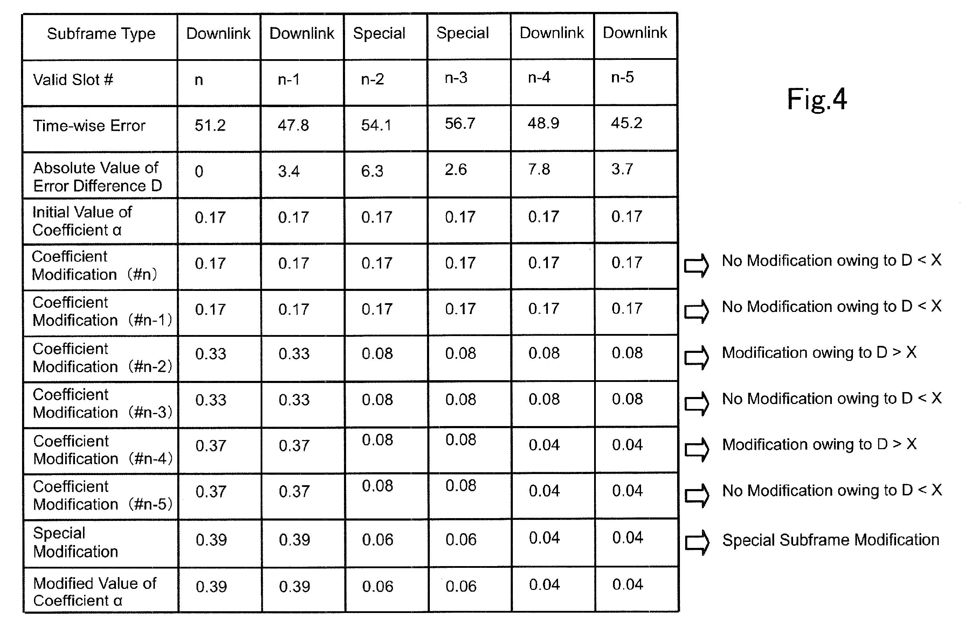

FIG. 4 is a drawing for explaining a calculation example with respect to the weighting coefficient α to be used in a power time averaging operation. In the example, an initial value of a weighting coefficient for each valid slot is set to be 1/n = 6, by using the number of time averaging; n slots. Beginning with a slot close to CQI report timing, a comparison is made between an absolute value of a difference in a time-wise fluctuation error between adjacent slots and the threshold; X = 4.0. In the case of the example that FIG. 4 shows, an absolute value of a time-wise fluctuation error between Slot #n-1 and Slot #n-2 at the time is 6.3 so as to be greater than the threshold. Therefore, it is determined that Slot #n-2 and its following valid slots have a great time-wise fluctuation in comparison with the slots of CQI report timing. Then, a weighting coefficient for the slot and its following slots is set to be half the initial value, and the reduced ratio is added to the initial value for Slot #n and Slot #n-1. By way of repeating this operation for the time-wise averaging extent; n slots, the weighting coefficient α is modified. Incidentally, the weighting coefficient α is adjusted in such a way that a sum of all coefficients becomes 1.

As described above, in the embodiment of the present invention, a time averaging operation is carried out with respect to an operation for generating a channel quality index of adaptive link control in a wireless communication system using TDD, while the amount of time fluctuation in a propagation path is taken into consideration. Thus, conditions of a propagation path at the time are reflected more accurately so that an estimation error is reduced by the time averaging operation. As a result, it becomes possible to carry out an optimum time averaging operation, being appropriate to the propagation path, so that an estimation accuracy of the channel quality index is improved.

Though concrete values are described as adjusting data for the threshold and coefficients in the explanation above, the present invention is not limited to these values and any other optional real numbers may be used. Moreover, though the weighting coefficient for the slot and its following slots is constantly multiplied by 0.5 if the difference in an error is greater than the threshold, the value does not necessarily need to be a constant value. The ratio can also dynamically be changed according to a difference from the threshold, in such a way that the ratio is reduced to some extent if the difference in an error and the threshold are greater than a certain value. Furthermore, thought the weighting coefficient for a special sub-frame is multiplied constantly by 0.8 regardless of a signal configuration of the sub-frame, a correction factor can also dynamically be applied by making use of a ratio of the known signals contained, which becomes different according to the signal configuration.

### {Reference Signs List}

10. Signal separator
11. Power estimation unit (power estimation means)
12. Time-wise error calculation unit (part of weighting coefficient setting means)
13. Time-wise error difference calculation unit (part of weighting coefficient setting means)
14. Threshold decision unit (part of weighting coefficient setting means)
15. Weighting coefficient calculation unit (part of weighting coefficient setting means)
16. Time-averaged power calculation unit (time-averaged power calculation means)
17. SINR calculation unit
18. Channel quality information conversion unit

## Claims

1. A mobile communication device comprising:
a power estimation means calculating estimated values of a noise power and a signal power of a received signal by making use of known signals contained in a slot as a unit on a time axis, and contained in a sub-band of a certain continuous frequency bandwidth as a unit on a frequency axis;
a time-averaged power calculation means time-averaging each sub-band with respect to a number n of estimated values which are estimated for each slot as a unit, among the estimated values calculated by the power estimation means; and
a weighting coefficient setting means calculating a time-wise error of the known signals, in a slot as a unit, and setting a weighting coefficient for each of the n estimated values for a time averaging in the time-averaged power calculation means, according to a predetermined threshold and an error difference of adjacent slots among the time-wise errors.

2. The mobile communication device according to claim 1: wherein, the weighting coefficient setting means sets a small weighting coefficient for an estimated value of a slot with the error difference being greater than the threshold, among the n estimated values; and sets a great weighting coefficient for an estimated value of a slot with the error difference being less than the threshold, among the same above.

3. The mobile communication device according to either of claim 1 or claim 2: wherein, the received signal contains a sub-frame with a few known signals, and the weighting coefficient setting means sets a weighting coefficient for the sub-frame with a few known signals, the weighting coefficient being different from a weighting coefficient for other frames.

4. The mobile communication device according to any one of claim 1 to claim 3: wherein, the received signal is a signal to be received by way of Time Division Duplex method.

5. A channel quality index estimation method comprising steps of:
calculating estimated values of a noise power and a signal power of a received signal by making use of known signals contained in a slot as a unit on a time axis, and contained in a sub-band of a certain continuous frequency bandwidth as a unit on a frequency axis;
time-averaging for each sub-band with respect to a number n of estimated values which are estimated for each slot as a unit, among the estimated values; and
estimating a channel quality index for the received signal, according to the time-averaged estimated values;
wherein, a time-wise error of the known signals, in a slot as a unit, is calculated; and a weighting coefficient is set for each of the n estimated values in the time-averaging, according to a predetermined threshold and an error difference of adjacent slots among the time-wise errors.
